# EUROPEAN PATENT SPECIFICATION

(11) **EP 3 805 594 B1**
(45) Date of publication and mention of the grant of the patent: **10.04.2024**
(21) Application number: 20199845.7
(22) Date of filing: 02.10.2020
(51) Int. Cl.: F16F 9/12, F16F 9/14

(54) **ROTARY DAMPER**
ROTATIONSDÄMPFER
AMORTISSEUR ROTATIF

(30) Priority: 03.10.2019 NL 2023944
(43) Date of publication of application: 14.04.2021
(73) Proprietor: Profunda B.V., 8304 AJ Emmeloord (NL)
(72) Inventor: Vesper, Frank, 72393 Burladingen (DE); Haug-Theisel, Susanne, 72475 Bitz (DE)
(74) Representative: Algemeen Octrooi- en Merkenbureau B.V.

(56) References cited:
- EP-A2- 0 926 383
- CN-Y- 200 961 659
- DE-A1- 10 224 581
- DE-B4- 10 224 581
- US-A- 5 988 329
- US-A1- 2018 003 256

## Description

The present invention relates to a rotary damper comprising:
a housing having at least one fluid chamber filled with a viscous fluid;
the fluid chamber being defined by a bottom wall, an upper wall and a curved cylindrical and/or conic side wall, and optionally a shaft wall;
a wing shaft provided in the fluid chamber for rotation relative to the housing;
a wing provided on the wing shaft and extending in an axial direction thereof,
the wing projecting in a radial direction of the wing shaft toward the curved cylindrical and/or conic side wall of the fluid chamber and comprising:
   a first side and a second side opposite to said first side, a top side at or near a tip end of the wing facing the curved cylindrical and/or conic side wall of the fluid chamber;
   a bottom side facing the bottom wall of the fluid chamber and an upper side opposite to said bottom side facing the upper wall of the fluid chamber,
   optionally a back side;
a fluid passage between the wing and a wall of the fluid chamber for allowing the viscous fluid to flow between the first side and the second side of the wing;
at least one groove is provided in the fluid passage, the groove being provided in a side of the wing and/or in a wall of the fluid chamber.

Rotary dampers are used to dampen the swivelling or rotating movements of lids or doors. Often the rotary dampers are mounted onto the rotation axis of the lid or door. In EP 1 462 047 A1 a rotary damper is disclosed for a toilet seat and/or cover having a hydraulic damping mechanism linked by a valve-regulated passage. The valve opens between the two passages when a pre-determined pressure differential is reached or exceeded. The housing has a specially designed "wavy" form and the axis is decentralized disposed in the housing. In the initial position, the distance between the wing and the housing is relatively large and thus the damping is relatively small. It therefore requires only a small amount of force to pivot the wing. Approximately in the middle of the movement of the wing, the damping effect is maximized because the distance between the circumferential surface of the fluid chamber and the wing is provided with the smallest value. Towards the end position of the wing, the distance becomes larger again. This rotary damper has the disadvantage that the damping characteristics of the rotary damper of EP 1 462 047 A1 can only be adjusted by changing the form of the housing and/or by changing the decentralized position of the axis.

In DE 102 24 581 A1 a more easily adjustable rotary damper is disclosed, wherein the wings on the wing shaft are provided with valve bodies, which are inserted or removably fitted into axial slots in the tip ends of the wings. The axial slots are completely filled with the valve basis; therefore, the axial slot/groove is not filled with viscous liquid and is not part of the fluid passage. The valve body is formed by integral moulding of plastics and comprises a valve part and a resilient spring part. The fluid passages extend through the valve body and through tangential grooves in the wings, the grooves extending from the first side wall of the wings to the second side wall. This rotary damper has the disadvantage that the valve bodies made from plastic wear down fast and must be replaced often, because the valve bodies are not fixedly connected and move and rotate relative to the slot and the wings. Furthermore, the damper disclosed in DE 102 24 581 A1 only provides a damping difference between closing and opening, varying damping during closing and creating a delay is not possible.

EP 0 926 383 A2 discloses a rotary damper provided with a circumferential, tangential groove in the curved cylindrical side wall. Furthermore, needle valves are provided in axial grooves in the top side of the wing. The tangetial groove provides a bypass and additional fluid passage for the viscous fluid around the top side of the wing, decreasing the damping caused by the fluid passage between the top side of the wing and the curved cylindrical side wall. Increasing the damping and creating a delay with this configuration is only possible by using (needle) valves.

CN 200 961 659 Y also discloses an axial slot in the top side of the wing for receiving a valve or blade, creating a difference in damping between closing and opening and not during closing or opening.

US 2018/003256 A1 discloses a rotary damper having a variable radial distance between the topside of the wing and the curved cylindrical side wall. Damping is not increased by providing grooves in the wall and/or in the wing.

### Object of the invention

Object of the present invention is therefore to provide for a rotary damper which overcomes the disadvantages of the aforementioned known dampers by being easily adjustable, and at the same time being durable and wear resistant, without using valves at the top end of the wing near the curved cylindrical and/or conic side wall.

A further object of the invention is to provide for a rotary damper, with which a delay function (dwell time) is easily implemented. Preferably, the dwell time must be realized at arbitrary positions of the movement sequence, e.g. in the completely open position or just before the closed position. Preferably, the duration of the dwell time must be fixed or adjustable.

### Summary of the invention

Accordingly, the at least one groove is entirely filled with the viscous fluid, the viscous fluid in the at least one groove being in fluid communication with the viscous fluid of the fluid passage allowing the viscous fluid of the fluid passage to flow through the at least one groove.

By providing a groove in a side of the wing and/or in a wall of the fluid chamber and/or in the wing shaft, the fluid passage is modified and/or adjusted, and accordingly the damping of the rotary damper is increased by inducing turbulences in the viscous fluid in the fluid passage, without the necessity of adjusting the form of the fluid chamber, or of repositioning the shaft, or of applying valve bodies on the tip of the wing. By manufacturing shafts with a wing having different groove(s) provided at a side of the wing facing a wall of the fluid chamber, the rotary dampers can easily be adjusted by selecting a shaft with wings with predetermined damping characteristics for a standard housing and fluid chamber.

According to the invention, the at least one groove forms a widened portion of the fluid passage perpendicular to the direction of flow of the viscous fluid.

More particular, the fluid passage comprises a first narrow portion near the first side of the wing and a second narrow portion near the second side of the wing, wherein the widened portion of the fluid passage is provided between the first and second narrow portion of the fluid passage.

By widening the fluid passage perpendicular to the (tangential) direction of the flow, in use the viscous fluid will be forced into the interior of the groove, filled with viscous fluid. This induces turbulences of the viscous fluid, thereby increasing the dissipation of energy and increasing the damping, so that a delay is created. This effect is enhanced, when the flow of the viscous fluid first encounters a narrow portion of the fluid passage, followed by the widened portion created by the groove, followed by a narrow portion of the fluid passage. This optimal configuration of the fluid passage is obtained, when the groove with the viscous liquid is entirely enclosed by the side of the wing or the wall, and when the width of the groove in the direction of the viscous fluid, in the tangential direction, is less than the width the opposing side of the wing or of the wall. As a result, the fluid passage between the wing and a wall is divided into at least three zones or portions, a turbulent widened portion adjoined on both sides by less turbulent narrow portions near the first and second side of the wing.

Preferably, the groove is extending in the axial direction in: the top side of the wing, and/or in the curved cylindrical and/or conic side wall of the fluid chamber, and/or in the back side of the wing, and/or in the shaft wall.

With axial grooves on the above-mentioned positions, the damping effect is increased, so that a delay function is easily created by means of the induced turbulences in the flow of the viscous liquid in a fluid passage.

Preferably, the groove is extending in the radial direction in: the bottom side of the wing, and/or in the upper side of the wing, and/or in the bottom wall of the fluid chamber, and/or in the upper wall of the fluid chamber.

With radial grooves on the above-mentioned positions, the damping effect is likewise increased, so that a delay function is easily created by means of the induced turbulences in the flow of the viscous liquid in a fluid passage.

Another advantage of the rotary damper according to the invention is that now, in the sequence of movement of the wing shaft, the wings shaft can remain almost motionless at one or more different positions for a period of time to be adjusted, before the movement continues.

In particular, two or more axial grooves are provided in the top side of the wing and/or two or more axial grooves are provided in the curved cylindrical and/or conic side wall of the fluid chamber, and/or two or more radial grooves are provided in the bottom wall and/or upper wall of the fluid chamber, and/or two or more radial grooves are provided in the bottom side and/or upper side of the wing; the grooves extending substantially parallel.

By providing an additional groove in a side of the wing and/or in a wall of the fluid chamber, the damping characteristics of the rotary damper is easily adjusted. Already manufactured shafts with wings are easily provided with an additional groove in order to provide for a customized rotatory damper.

Preferably, the cross-section of an axial or radial groove in tangential direction has a round shape; alternatively, the cross-section of a groove is chosen from: V-shape, rectangular-shape, multi-angular-shape.

It has been found, that a round shape of the groove results in an advantageous additional flow of the damping fluid in the groove. Alternatively, other regular shapes also provide for an advantageous modification of the fluid passage between a side of the wing and a wall of the fluid chamber. Other, (ir)regular shapes of the groove will also have an effect on the damping characteristics of the rotary damper.

Preferably, the shape of the top side of the wing corresponds with or is congruent with a portion of the surface of the curved cylindrical and/or conic side wall of the fluid chamber. This measure provides for a fluid passage between the top side of the wing and the curved cylindrical and/or conic side wall of the fluid chamber, which passage has a constant thickness between the first side and the second side of the wing, so that the viscous fluid flows evenly in and out of the fluid passage and in and out of the groove, providing reproducible and predictable damping properties.

In an advantageous embodiment according to the invention at least a second wing is provided on the outer circumferential surface of the wing shaft, which second wing is extending in an axial direction of the wing shaft, the second wing projecting toward the curved cylindrical and/or conic side wall of a second fluid chamber, creating a second fluid passage between the second wing and a wall of the second fluid chamber, wherein at least one groove is provided in the second fluid passage, the groove being provided in a side of the second wing and/or in a wall of the second fluid chamber.

With a second wing rotating in a second fluid chamber a symmetrical shaft with wings is provided, thereby reducing the force on the wings and the shaft resulting in less wear and a longer lifespan and better durability. Furthermore, by applying two or more wings, special damping properties can easily be configured, e.g. by providing different grooves on the sides of the wings and/or in the walls of the fluid chambers.

Usually, for obtaining additional damping, the first and the second fluid chambers are not connected, so the fluid is not able to flow between the fluid chambers. However, means for preventing overpressure may be provided, like an overpressure valve located in an intermediate wall (a partition between the fluid chambers serving as end stop for the upper and lower end position of the wings) between the fluid chambers.

In another preferred embodiment, the axial grooves are provided in the inner circumferential surface of an insert piece.

By providing an insert piece, which may easily be inserted in and removed from the housing of the rotary damper, the rotary damper is easily customized for the required use. Only the insert piece with the groove(s) must be redesigned for each new application, the housing and all other parts of the rotary damper do not have to be changed.

Preferably, the surface of the curved cylindrical and/or conic side wall of a fluid chamber in the tangential direction is provided with a varying radial distance to the wing shaft, in particular, the varying radial distance of the wing shaft to the inner circumferential surface of a fluid chamber is provided by means of an insert piece.

The clearance between the wing tip and the inner surface of a fluid chamber in the housing can easily be adjusted by applying an insert piece having a 'wavy' form e.g. so that the width of the clearance varies with the tangential position of the rotating wing shaft. As a result, no redesign and/or special manufacturing of the housing is necessary.

In a special embodiment, the fluid chamber is provided with a shaft wall and the wing shaft is provided with a portion having a smaller diameter, thereby forming a fluid passage between the back side of the wing, opposite the top side, and the shaft wall of the fluid chamber, wherein the back side of the wing is provided with a groove. This allows for configurating a damping path of the wing, which exerts less pressure and bending forces on the wing(s), thereby increasing the lifespan of the rotary damper.

A special embodiment is characterized in that the insert piece is a rotatory groove element having a rotation axis, the outer surface of the insert piece in the circumferential direction is provided with two or more grooves, the grooves are extending in the axial direction with respect to its rotation axis. Preferably, the rotation axis of the rotatory groove element essentially is extending parallel to the wing shaft. In particular, the rotatory groove element is received in a recess in the curved cylindrical and/or conic side wall of a fluid chamber. By providing the grooves in a rotary groove element, it is possible to change the damping properties of the rotary damper by rotating the rotary groove element and selecting another groove. Now the user is able to change the damping characteristics of an already installed and mounted rotary damper by rotating the rotary groove element, without needing to open the housing, replacing parts and/or needing assistance from the manufacturer.

The features and advantages described in this summary and the following detailed description are not all inclusive. Many additional features and advantages will be apparent to one of ordinary skill in the art in view of the examples, specification and claims hereof.
- Figure 1: is a perspective view of a rotating lid with a rotary damper;
- Figure 2: is a top view of the rotary damper of Figure 1 with removed cover and upper wall of the fluid chamber;
- Figure 3: is a top view of the rotary damper according to the invention with opened housing;
- Figure 4: is a perspective view of the rotary damper with insert piece;
- Figure 5: is a perspective top view of the rotary damper with rotary groove element;
- Figures 6A - 6C: are perspective views of the wing shaft with wings provided with grooves;
- Figure 7A - 7B: are perspective views of a wing shaft with a groove, and with a wing having a groove in the backside.

The invention is now described by the following aspects and embodiments, with reference to the figures.

For convenience of interpretation of the figures, the following terms are used.

The terms axial, radial and tangential are to be understood as substantially axial, radial, respectively tangential,
whereby axial meaning: in the direction of the wing shaft,
whereby radial meaning: in the radial direction with respect to the wing shaft,
whereby tangential meaning: circular or circumferential direction when rotating around the wing shaft.

The term "curved cylindrical and/or conic side wall", as used herein, is intended to refer broadly to the essentially and substantially circular, cylindrical shape of the side wall in the tangential direction. This shape may be provided with one or more additional shapes like a conical, elliptical, parabolic, hyperbolic shape.

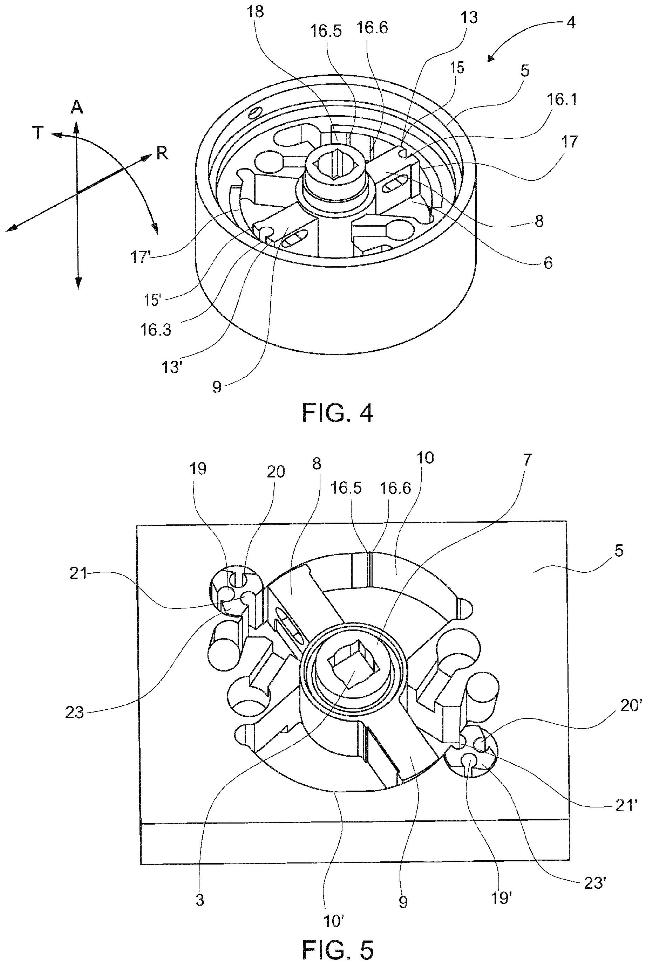

Figure 4 shows a perspective view of a rotary damper according to the invention.

Arrow A indicates the axial direction; arrow R indicates the radial direction; arrow T indicates the tangential direction.

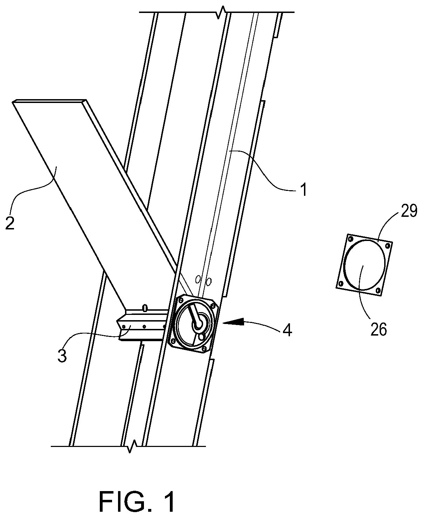

Figure 1 shows a frame 1 provided with a lid or cover 2, which may be opened and closed. The lid 2 is mounted onto the frame 1 by means of a rotary shaft 3. The rotary shaft 3 is connected to a rotary damper 4, which damps the rotating motion of the lid 2. The cover 29 comprising the upper wall 26 of the fluid chamber 6 is removed, so that the fluid chamber and the wing are visible.

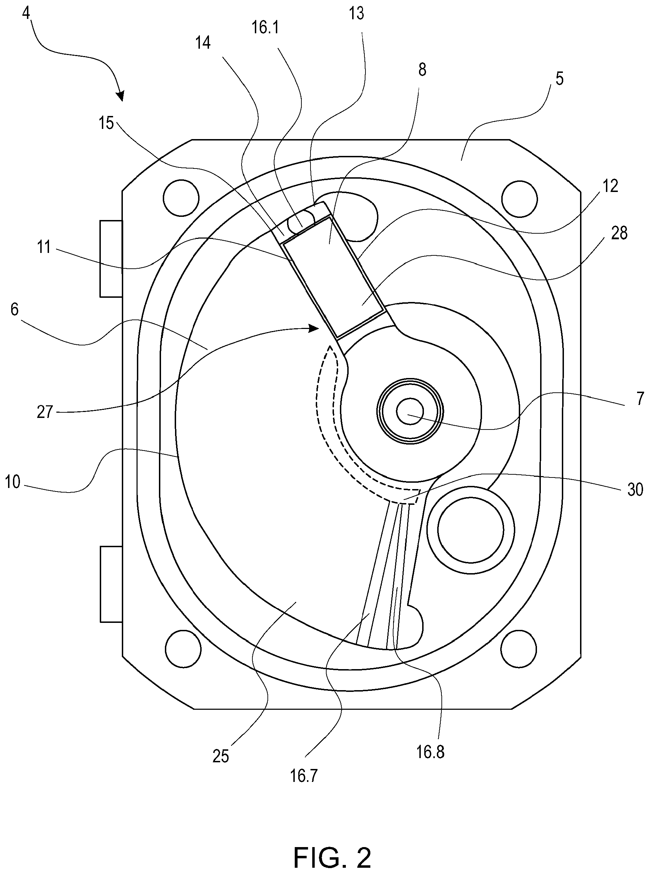

Figure 2 shows in more detail the rotary damper 4 according to the invention shown in Figure 1 without cover 29 and the upper wall 26 of the fluid chamber 6.

The rotary damper 4 has a housing 5 with a fluid chamber 6. The fluid chamber 6 is filled with a viscous fluid. According to the invention, the rotary damper 4 at least has one fluid chamber 6 and one wing shaft 7 with one wing 8. The fluid chamber 6 is defined by a bottom wall 25, an upper wall 26 and a curved cylindrical and/or conic side wall 10. In the fluid chamber 6 a wing shaft 7 is provided, which is able to be connected to the rotary shaft 3 of the lid 2. The wing shaft 7 is provided with a wing 8, which is mounted onto the wing shaft in the axial direction. The wing 8 is projecting in the radial direction R with respect to the wing shaft toward the curved cylindrical and/or conic side wall 10 of the fluid chamber 6. The wing 8 has a top side 13 at or near a tip end 14 of the wing 8 facing the curved cylindrical and/or conic side wall 10 of the fluid chamber 6, a bottom side 27 facing the bottom wall 25 of the fluid chamber 6 and an upper side 28 opposite to said bottom side 27 facing the upper wall 26 of the fluid chamber. The wing has a first side 11 and a second side 12 opposite to said first side 11, both sides extending in the axial direction A. Between a wall 25, 26, 10 of the fluid chamber 6 and the wing 8 a clearance or fluid passage 15 is formed for allowing the viscous fluid to flow between the first side 11 and said second side 12 of the wing 8. When the wing shaft 7 rotates in the fluid chamber 6 of the housing 5 the wing displaces the viscous fluid and the fluid is pressed through the fluid passage between the first and second side of the wing. As a result, the movement of the wing shaft 7 and the connected rotary shaft 3 is counteracted and the movement of the lid 2 is damped.

According to the invention, at least one groove 16.1, 16.7, is provided in a fluid passage 15, the groove being provided in a side 13, 27, 28 of the wing 8 and/or in a wall 10, 25, 26 of the fluid chamber 6. The interior space of the groove 16.1, 16.7 is entirely filled with the viscous fluid, the viscous fluid in the groove 16.1, 16.7 being in fluid communication with the viscous fluid of the fluid passage 15 allowing the viscous fluid of the fluid passage to flow through the groove 16.1, 16.7. Because the flow of the viscous fluid is diverted into the recess or space of the groove 16.1, 16.7 filled with viscous fluid, turbulences are induced into the viscous flow resulting in an increased counteracting force and damping, causing an almost standstill (delay) of the wing. In the embodiment of Figure 2, a first groove 16.1 is shown extending in the axial direction A on the top side 13 of the wing 8, substantially perpendicular to the tangential direction T of the viscous fluid flow in the fluid passage 15 between the top side 13 at or near a tip end 14 of the wing 8 and the curved cylindrical and/or conic side wall 10 of the fluid chamber 6. The fluid will flow and interact with the fluid in the recess of the groove 16.1 and change the damping properties of the rotary damper 4.

Preferably, the axial groove 16.1 forms a widened portion in radial direction of the fluid passage 15 perpendicular to the tangential direction T of flow of the viscous fluid. Preferably, the axial groove 16.1 has a width in the tangential direction, which is smaller than the width of the wing in the tangential direction, so that a first and second narrow portion of the fluid passage 15 in the tangential direction is formed, with in between an in the radial direction widened portion of the fluid passage created by the axial groove 16.1.

Furthermore, in Figure 2 a second groove 16.7 is shown extending in radial direction R, the groove being provided in the bottom wall 25 of the fluid chamber 6, which radial groove cooperates with the bottom side 27 of the wing 8.

Preferably, the radial groove 16.7 has a width in the tangential direction, which is smaller than the width of the wing in the tangential direction, so that a first and second narrow portion of the fluid passage 15 in the tangential direction is formed, with in between an in the axial direction widened portion of the fluid passage created by the radial groove 16.7. The axial groove 16.1 in the wing and the radial groove 16.7 in the bottom wall 25 and/or upper wall 26 of the fluid chamber 6 preferably have a circular shape, when viewed in tangential cross-section. Additional, parallel extending, grooves 16.8 may be provided in the bottom wall 25 and/or upper wall 26 of the fluid chamber 6.

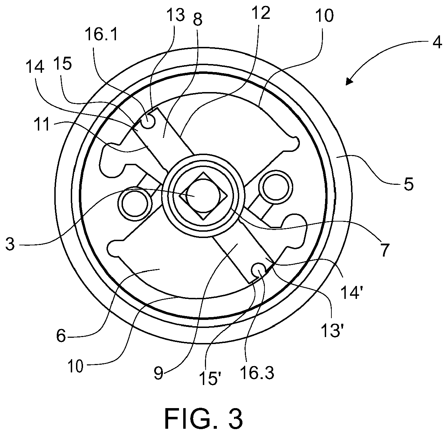

In an enhanced embodiment of the invention, as shown in Figures 3 - 5 the rotary damper is provided with a second wing 9 on the wing shaft 7. The second wing 9 is enclosed by a second fluid chamber 6', thereby preventing flow of the fluid between the first and the second fluid chamber. The second wing 9 comprises a top side 13', at or near the tip end 14' between the first and second side. The top side 13' also faces the curved cylindrical and/or conic side wall 10 of the second fluid chamber 6'. Between the top side 13' of the second wing 9 and the curved cylindrical and/or conic side wall 10 of the second fluid chamber 6' a clearance or second fluid passage 15' is formed for allowing the viscous fluid to flow between the first side 11 and said second side 12 of the (second) wing 9. An axial groove 16.3 is provided in the top side 13' of the wing 9 at or near the tip end 14' of the wing 9 and the curved cylindrical and/or conic side wall 10 of the fluid chamber 6'. The above-mentioned measures may be combined with the housing wall having different radii, merging into each other (so-called "wavy" form), so that different gap widths or clearances are realized and a delay function (dwell time) is implemented in the rotary damper. The dwell time can be realized at arbitrary positions of the movement sequence, e.g. in completely open position or just before the closed position. The duration of the dwell time can be fixed or adjustable.

Figure 4 shows an extensive embodiment of the invention, in which the axial grooves 16.1, 16.3, 16.5, 16.6 are provided at the top sides 13, 13' of the wings 8, 9 and in insert pieces 17, 17' in the curved cylindrical and/or conic side wall 10 (see Figure 2) of the fluid chambers 6, 6'. By using insert pieces 17, 17' in the curved cylindrical and/or conic side wall 10 of the fluid chambers 6, 6' the rotary damper 4 can be adjusted easily, without redesigning and manufacturing a new housing 5. The axial grooves 16.5, 16.6 in the insert pieces 17, 17' are provided parallel to the direction of the wing shaft 7. An insert piece can be modified easily and may simply be provided with grooves 16.5, 16.6 on its inner surface 18, and can easily be inserted in already produced and manufactured housings 5 for assembling and modifying rotary dampers 4.

The insert piece 17, 17' may also be provided with a 'wavy' form having different radii, so that the width of the clearances/gaps for the fluid passages 15, 15' between the top sides 13, 13' of the wings 8, 9 and the curved cylindrical and/or conic side wall 10 of the fluid chambers 6, 6' varies with the tangential position of the rotating wing shaft. As a result, no redesign and/or special manufacturing of the housing is necessary when the damping characteristics must be adjusted to the specific opening and the closing movement of the lid or cover to be damped.

The shape of the top side 13 of the first wing 8 (and optionally of the second or more wings) corresponds with or is congruent with a portion of the curved cylindrical and/or conic side wall 10 of the fluid chamber 6. As a result, the fluid passage 15 (gap or clearance) between the top side 13 of the first wing 8 and the curved cylindrical and/or conic side wall 10 of the fluid chamber 6 has a first narrow portion near the first side 11 and a second narrow portion near the second side 12 of the wing 8. Between the first narrow portion and the second narrow portion, a widened portion in the radial direction of the fluid passage is formed by the grooves 16.1, 16.5, 16.6, forcing the viscous fluid into the grooves and thereby inducing turbulences in the flow and increasing the damping and creating a delay. This provides for a rotary damper having reproducible and predictable damping properties.

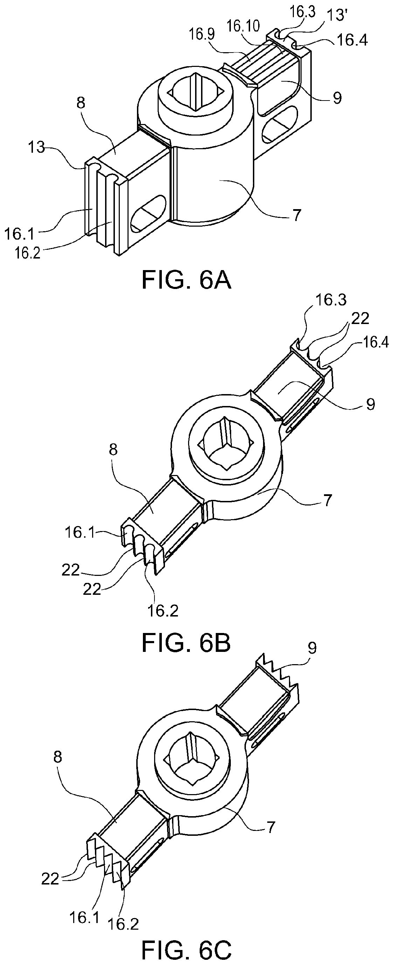

Figures 6A - 6C show three different embodiments of the wing shaft 7 with wings 8, 9. Figure 6A shows two parallel set of axial grooves 16.1, 16.2 and 16.3, 16.4 at the top sides 13, 13', the cross-section of the grooves 16.1, 16.2 and 16.3, 16.4 having a round shape and being a circle segment. Furthermore, two parallel, radially extending grooves 16.9, 16.10 are shown, for cooperation with the upper wall of the fluid chamber.

Figure 6B shows three parallel axial grooves 16.1 - 16.2 and 16.3 - 16.4, abutting each other and thereby forming sharp edges or teeth 22, inducing additional turbulence in the viscous fluid, thereby increasing the damping.

Figure 6C shows four parallel abutting axial grooves 16.1 - 16.2, the cross-section of the grooves is V-shaped, thereby also forming sharp edges or teeth 22, inducing additional turbulence in the viscous fluid, thereby increasing the damping.

Figure 5 is an alternative embodiment of the rotary damper, wherein the axial grooves 21, 21' are provided in a rotary groove element 20, 20'. The rotation axis of the rotary groove element 20, 20' is extending parallel to the wing shaft 7. The rotary groove element 20, 20' is received and mounted in a recess 23, 23' in the housing 5, e.g. provided in the curved cylindrical and/or conic side wall 10, 10' of the fluid chamber 6, 6'. The rotary groove element 20, 20' is provided with different axial grooves 21, 21' on two or more (three in Figure 5) outer surfaces of the rotary groove element 20, 20'. By rotating the rotary groove element 20, 20' the damping properties of the rotary damper are easily adjusted by the user, without the need for disassembling the rotatory damper, such as opening the housing 5 and replacing the insert piece 17, 17' and/or the wing shaft 7 with the wings 8, 9.

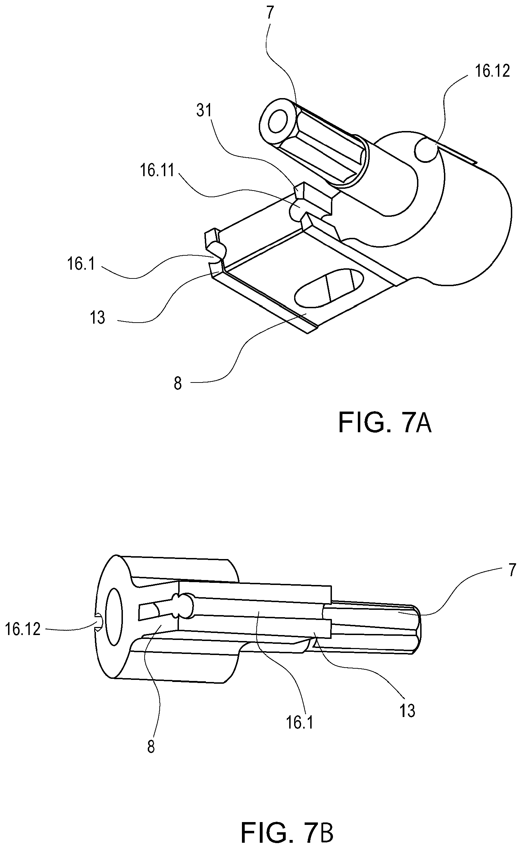

Figure 7A & 7B show an alternative embodiment of a wing 8 on a wing shaft 7. The fluid chamber 6 in Figure 2 is provided with a shaft wall 30 and the wing shaft 7 is provided with a portion having a smaller diameter, thereby forming a fluid passage between the back side 31 of the wing 8, opposite the top side 13 of the wing, and the shaft wall 30 of the fluid chamber 6. In this embodiment the top side 13 of the wing 8 is provided with an axial groove 16.1 and the back side 31 of the wing 8 is provided with an axial groove 16.11. Optionally, the shaft wall 30 may also be provided with an axial groove. The wing shaft 7 is also provided with an axial groove 16.12, for an embodiment of the invention comprising a fluid passage between the wing shaft 7 and a wall of the fluid chamber 6.

In order to enhance the rotary damper additional functions may be added.

Flutter valve. The lid or cover may be opened easier by providing one or more wings with a flutter valve made of spring steel. This valve opens when the lid opens and allows for the fluid to flow through. This reduces the damping effect during opening of the lid. Alternatively, a latch valve is also suitable for use in the rotary damper according to the invention.

Overpressure valve. When the lid and the damper are additionally accelerated during closing, overpressure can occur in the fluid chambers. This overpressure is compensated by an additional pressure relief valve (spring-loaded) located in the intermediate walls (the partitions between the chambers serving as end stops for the upper and lower end position of the wings) of the fluid chamber.

Alternatively, a system of bypass channels may be provided, thereby regulating the damping force and thus the speed of the lid to be damped.

The rotary damper may also be provided with an elastic compensating element in the chamber wall or in a bypass channel, which element serves as a temperature compensation to compensate for the expansion of the fluid due to temperature fluctuations.

## Claims

1. Rotary damper (4) comprising:
a housing (5) having at least one fluid chamber (6) filled with a viscous fluid;
the fluid chamber being defined by a bottom wall (25), an upper wall (26), a curved cylindrical and/or conic side wall (10), and optionally a shaft wall (30);
a wing shaft (7) provided in the fluid chamber (6) for rotation relative to the housing (5);
a wing (8) provided on the wing shaft (7) and extending in an axial direction thereof, the wing (8) projecting in a radial direction of the wing shaft toward the curved cylindrical and/or conic side wall (10) of the fluid chamber (6) and
comprising:
a first side (11) and a second side (12) opposite to said first side (11),
a top side (13) at or near a tip end (14) of the wing (8) facing the curved cylindrical and/or conic side wall (10) of the fluid chamber (6),
a bottom side (27) facing the bottom wall (25) of the fluid chamber (6) and an upper side (28) opposite to said bottom side (27) facing the upper wall (26) of the fluid chamber,
optionally a back side (31);
a fluid passage (15) between the wing (8) and/or the wing shaft (7) and a wall (25, 26, 10) of the fluid chamber (6) for allowing the viscous fluid to flow between the first side (11) and the second side (12) of the wing (8);
at least one groove (16.1, 16.3, 16.5, 16.7, 16.9, 16.11, 16.12) is provided in the fluid passage (15), the groove being provided in a side (13, 27, 28, 31) of the wing (8) and/or in a wall (10, 25, 26) of the fluid chamber (6) and/or in the wing shaft (7);
the at least one groove (16.1, 16.3, 16.5, 16.7, 16.9, 16.11, 16.12) is entirely filled with the viscous fluid, the viscous fluid in the at least one groove (16.1, 16.3, 16.5, 16.7, 16.9, 16.11, 16.12) being in fluid communication with the viscous fluid of the fluid passage (15) allowing the viscous fluid of the fluid passage to flow through the at least one groove (16.1, 16.3, 16.5, 16.7, 16.9, 16.11, 16.12); **characterized, in that**
the at least one groove (16.1, 16.3, 16.5, 16.7, 16.9, 16.11, 16.12) forms a widened portion of the fluid passage (15) perpendicular to the direction of flow of the viscous fluid.

2. Rotary damper according to claim 1, wherein the fluid passage (15) comprises a first narrow portion near the first side (11) of the wing (8) and a second narrow portion near the second side (12) of the wing, wherein the widened portion of the fluid passage (15) is provided between the first and second narrow portion of the fluid passage (15).

3. Rotary damper according to claim 1-2, wherein the groove (16.1, 16.3, 16.5, 16.11, 16.12) is extending in the axial direction in: the top side (13) of the wing (8), and/or in the curved cylindrical and/or conic side wall (10) of the fluid chamber (6), and/or in the back side (31) of the wing (8), and/or in the shaft wall (30), and/or in the wing shaft (7).

4. Rotary damper according to claim 1-3, wherein the groove (16.7, 16.9) is extending in the radial direction in: in the bottom side (27) of the wing (8), and/or in the upper side (28) of the wing (8), and/or in the bottom wall (25) of the fluid chamber (6), and/or in the upper wall (26) of the fluid chamber (6).

5. Rotary damper according to claim 1-4, wherein two or more axial grooves (16.1, 16.2) are provided in the top side (13) of the wing (8), and/or two or more axial grooves (16.5, 16.6) are provided in the curved cylindrical and/or conic side wall (10) of the fluid chamber (6), and/or two or more radial grooves (16.7, 16.8) are provided in the bottom wall (25) and/or upper wall (26) of the fluid chamber (6), and/or two or more radial grooves (16.9, 16.10) are provided in the bottom side (27) and/or upper side (28) of the wing (8); the grooves extending substantially parallel.

6. Rotary damper according to claim 1-5, wherein the cross-section of a groove (16.1, 16.3, 16.5, 16.7, 16.9, 16.11, 16.12) is chosen from: a round shape, V-shape, rectangular-shape, multi-angular-shape.

7. Rotary damper according to claim 1-6, wherein the shape of the top side (13) of the wing (8) corresponds with or is congruent with a portion of the surface the curved cylindrical and/or conic side wall (10) of the fluid chamber (6).

8. Rotary damper according to claim 1-7, wherein at least a second wing (9) is provided on the outer circumferential surface of the wing shaft (7), which second wing (9) is extending in an axial direction of the wing shaft (7), the second wing (9) projecting toward the curved cylindrical and/or conic side wall (10) of a second fluid chamber (6'), creating a second fluid passage (15') between the second wing (9) and a wall (10) of the second fluid chamber (6'), wherein a groove (16.3) is provided in a side (13') of the second wing (9) and/or in a wall (10) of the second fluid chamber (6').

9. Rotary damper according to claim 3, wherein the curved cylindrical and/or conic side wall (10) of the fluid chambers (6, 6') is provided with an insert piece (17, 17'), and wherein the axial grooves (16.5, 16.6) are provided in the inner circumferential surface (18) of an insert piece (17).

10. Rotary damper according to claim 1 - 9, wherein the surface of the curved cylindrical and/or conic side wall (10) of a fluid chamber (6, 6') in the tangential direction is provided with a varying radial distance to the wing shaft (7) .

11. Rotary damper according to claim 10, wherein the varying radial distance of the wing shaft (7) to the surface of the curved cylindrical and/or conic side wall (10) of a fluid chamber (6, 6') is provided by means of an insert piece (17).

12. Rotary damper according to claim 9, wherein the insert piece (17) is a rotatory groove element (19, 19') having a rotation axis, the outer surface (20, 20') of the insert piece (19, 19') in the circumferential direction is provided with two or more grooves (21, 21'), the grooves (21, 21') are extending in the axial direction with respect to its rotation axis.

13. Rotary damper according to claim 12, wherein the rotation axis of the rotatory groove element (19, 19') essentially is extending parallel to the wing shaft (7).

14. Rotary damper according to claim 12 - 13, wherein the rotatory groove element (19, 19') is received in a recess (23, 23') in the curved cylindrical and/or conic side wall (10, 10') of the fluid chamber (6, 6').

## Patentansprüche

1. Rotationsdämpfer (4), der Folgendes umfasst:
ein Gehäuse (5), das zumindest eine Fluidkammer (6) aufweist, die mit einem viskosen Fluid gefüllt ist;
wobei die Fluidkammer durch eine untere Wand (25), eine obere Wand (26), eine gekrümmte zylindrische und/oder konische Seitenwand (10) und optional eine Wellenwand (30) definiert ist;
eine Flügelwelle (7), bereitgestellt in der Fluidkammer (6) zur Rotation relativ zum Gehäuse (5);
einen Flügel (8), bereitgestellt an der Flügelwelle (7) und sich in eine axiale Richtung davon erstreckend, wobei der Flügel (8) in einer radialen Richtung der Flügelwelle in Richtung der gekrümmten zylindrischen und/oder konischen Seitenwand (10) der Fluidkammer (6) herausragt, und Folgendes umfasst:
eine erste Seite (11) und eine zweite Seite (12) gegenüber der ersten Seite (11),
eine Oberseite (13) an oder nahe einem Spitzenende (14) des Flügels (8), die zur gekrümmten zylindrischen und/oder konischen Seitenwand (10) der Fluidkammer (6) zeigt,
eine untere Seite (27), die zur unteren Wand (25) der Fluidkammer (6) zeigt, und eine obere Seite (28) gegenüber der unteren Seite (27), die zur oberen Wand (26) der Fluidkammer zeigt,
optional eine Rückseite (31);
einen Fluiddurchgang (15) zwischen dem Flügel (8) und/oder der Flügelwelle (7) und einer Wand (25, 26, 10) der Fluidkammer (6), um dem viskosen Fluid zu ermöglichen, zwischen der ersten Seite (11) und der zweiten Seite (12) des Flügels (8) zu strömen;
wobei zumindest eine Nut (16.1, 16.3, 16.5, 16.7, 16.9, 16.11, 16.12) in dem Fluiddurchgang (15) bereitgestellt ist, wobei die Nut in einer Seite (13, 27, 28, 31) des Flügels (8) und/oder in einer Wand (10, 25, 26) der Fluidkammer (6) und/oder in der Flügelwelle (7) bereitgestellt ist;
wobei die zumindest eine Nut (16.1, 16.3, 16.5, 16.7, 16.9, 16.11, 16.12) gänzlich mit dem viskosen Fluid gefüllt ist, wobei das viskose Fluid in der zumindest einen Nut (16.1, 16.3, 16.5, 16.7, 16.9, 16.11, 16.12) in Fluidverbindung mit dem viskosen Fluid des Fluiddurchgangs (15) ist, um dem viskosen Fluid des Fluiddurchgangs zu ermöglichen, durch die zumindest eine Nut (16.1, 16.3, 16.5, 16.7, 16.9, 16.11, 16.12) zu strömen;
**dadurch gekennzeichnet, dass**
die zumindest eine Nut (16.1, 16.3, 16.5, 16.7, 16.9, 16.11, 16.12) einen verbreiterten Teil des Fluiddurchgangs (15) senkrecht zur Strömungsrichtung des viskosen Fluids bildet.

2. Rotationsdämpfer nach Anspruch 1, wobei der Fluiddurchgang (15) einen ersten schmalen Teil nahe der ersten Seite (11) des Flügels (8) und einen zweiten schmalen Teil nahe der zweiten Seite (12) des Flügels umfasst, wobei der verbreiterte Teil des Fluiddurchgangs (15) zwischen dem ersten und dem zweiten schmalen Teil des Fluiddurchgangs (15) bereitgestellt ist.

3. Rotationsdämpfer nach Anspruch 1 - 2, wobei sich die Nut (16.1, 16.3, 16.5, 16.11, 16.12) in die axiale Richtung erstreckt in: der Oberseite (13) des Flügels (8) und/oder in der gekrümmten zylindrischen und/oder konischen Seitenwand (10) der Fluidkammer (6) und/oder in der Rückseite (31) des Flügels (8) und/oder in der Wellenwand (30) und/oder in der Flügelwelle (7).

4. Rotationsdämpfer nach Anspruch 1 - 3, wobei sich die Nut (16.7, 16.9) in die radiale Richtung erstreckt in: der unteren Seite (27) des Flügels (8) und/oder in der oberen Seite (28) des Flügels (8) und/oder in der unteren Wand (25) der Fluidkammer (6) und/oder in der oberen Wand (26) der Fluidkammer (6).

5. Rotationsdämpfer nach Anspruch 1 - 4, wobei zwei oder mehr axiale Nuten (16.1, 16.2) in der Oberseite (13) des Flügels (8) bereitgestellt sind und/oder zwei oder mehr axiale Nuten (16.5, 16.6) in der gekrümmten und/oder konischen Seitenwand (10) der Fluidkammer (6) bereitgestellt sind und/oder zwei oder mehr radiale Nuten (16.7, 16.8) in der unteren Wand (25) und/oder oberen Wand (26) der Fluidkammer (6) bereitgestellt sind und/oder zwei oder mehr radiale Nuten (16.9, 16.10) in der unteren Seite (27) und/oder oberen Seite (28) des Flügels (8) bereitgestellt sind; wobei sich die Nuten im Wesentlichen parallel erstrecken.

6. Rotationsdämpfer nach Anspruch 1 - 5, wobei der Querschnitt einer Nut (16.1, 16.3, 16.5, 16.7, 16.9, 16.11, 16.12) ausgewählt wird aus: einer runden Form, V-Form, rechteckigen Form, Polygonalform.

7. Rotationsdämpfer nach Anspruch 1 - 6, wobei die Form der Oberseite (13) des Flügels (8) einem Teil der Oberfläche der gekrümmten zylindrischen und/oder konischen Seitenwand (10) der Fluidkammer (6) entspricht oder damit kongruent ist.

8. Rotationsdämpfer nach Anspruch 1 - 7, wobei zumindest ein zweiter Flügel (9) an der äußeren umlaufenden Oberfläche der Flügelwelle (7) bereitgestellt ist, wobei sich der zweite Flügel (9) in eine axiale Richtung der Flügelwelle (7) erstreckt, wobei der zweite Flügel (9) in Richtung der gekrümmten und/oder konischen Seitenwand (10) einer zweiten Fluidkammer (6') herausragt, einen zweiten Fluiddurchgang (15') zwischen dem zweiten Flügel (9) und einer Wand (10) der zweiten Fluidkammer (6') erzeugend, wobei eine Nut (16.3) in einer Seite (13') des zweiten Flügels (9) und/oder in einer Wand (10) der zweiten Fluidkammer (6') bereitgestellt ist.

9. Rotationsdämpfer nach Anspruch 3, wobei die gekrümmte zylindrische und/oder konische Seitenwand (10) der Fluidkammern (6, 6') mit einem Einsatzstück (17, 17') versehen ist und wobei die axialen Nuten (16.5, 16.6) in der inneren umlaufenden Oberfläche (18) eines Einsatzstücks (17) bereitgestellt sind.

10. Rotationsdämpfer nach Anspruch 1 - 9, wobei die Oberfläche der gekrümmten zylindrischen und/oder konischen Seitenwand (10) einer Fluidkammer (6, 6') in der tangentialen Richtung mit einem variierenden radialen Abstand zur Flügelwelle (7) versehen ist.

11. Rotationsdämpfer nach Anspruch 10, wobei der variierende radiale Abstand der Flügelwelle (7) zur Oberfläche der gekrümmten und/oder konischen Seitenwand (10) einer Fluidkammer (6, 6') mittels eines Einsatzstücks (17) bereitgestellt ist.

12. Rotationsdämpfer nach Anspruch 9, wobei das Einsatzstück (17) ein rotatorisches Nutelement (19, 19') mit einer Rotationsachse ist, wobei die äußere Oberfläche (20, 20') des Einsatzstücks (19, 19') in der umlaufenden Richtung mit zwei oder mehr Nuten (21, 21') versehen ist, wobei sich die Nuten (21, 21') in der axialen Richtung bezüglich ihrer Rotationsachse erstrecken.

13. Rotationsdämpfer nach Anspruch 12, wobei sich die Rotationsachse des rotatorischen Nutelements (19, 19') im Wesentlichen parallel zur Flügelwelle (7) erstreckt.

14. Rotationsdämpfer nach Anspruch 12 - 13, wobei das rotatorische Nutelement (19, 19') in einer Vertiefung (23, 23') in der gekrümmten zylindrischen und/oder konischen Seitenwand (10, 10') der Fluidkammer (6, 6') aufgenommen ist.

## Revendications

1. Amortisseur rotatif (4) comprenant :
un boîtier (5) ayant au moins une chambre de fluide (6) remplie d'un fluide visqueux ;
la chambre de fluide étant définie par une paroi inférieure (25), une paroi supérieure (26), une paroi latérale cylindrique et/ou conique incurvée (10) et éventuellement une paroi d'arbre (30) ;
un arbre d'aile (7) prévu dans la chambre de fluide (6) pour une rotation par rapport au boîtier (5) ;
une aile (8) prévue sur l'arbre d'aile (7) et s'étendant dans une direction axiale de celui-ci, l'aile (8) faisant saillie dans une direction radiale de l'arbre d'aile vers la paroi latérale cylindrique et/ou conique incurvée (10) de la chambre de fluide (6) et comprenant :
un premier côté (11) et un second côté (12) opposé audit premier côté (11),
un côté supérieur (13) au niveau ou à proximité d'une extrémité de pointe (14) de l'aile (8) faisant face à la paroi latérale cylindre et/ou conique incurvée (10) de la chambre de fluide (6),
un côté inférieur (27) faisant face à la paroi inférieure (25) de la chambre de fluide (6) et un côté supérieur (28) opposé audit côté inférieur (27) faisant face à la paroi supérieure (26) de la chambre de fluide,
éventuellement un côté arrière (31) ;
un passage de fluide (15) entre l'aile (8) et/ou l'arbre d'aile (7) et une paroi (25, 26, 10) de la chambre de fluide (6) pour permettre au fluide visqueux de s'écouler entre le premier côté (11) et le second côté (12) de l'aile (8) ;
au moins une rainure (16.1, 16.3, 16.5, 16.7, 16.9, 16.11, 16.12) est prévue dans le passage de fluide (15), la rainure étant prévue dans un côté (13, 27, 28, 31) de l'aile (8) et/ou dans une paroi (10, 25, 26) de la chambre de fluide (6) et/ou dans l'arbre d'aile (7) ;
l'au moins une rainure (16.1, 16.3, 16.5, 16.7, 16.9, 16.11, 16.12) est entièrement remplie du fluide visqueux, le fluide visqueux dans l'au moins une rainure (16.1, 16.3, 16.5, 16.7, 16.9, 16.11, 16.12) étant en communication fluidique avec le fluide visqueux du passage de fluide (15), permettant au fluide visqueux du passage de fluide de s'écouler à travers l'au moins une rainure (16.1, 16.3, 16.5, 16.7, 16.9, 16.11, 16.12) ;
**caractérisé en ce que**
l'au moins une rainure (16.1, 16.3, 16.5, 16.7, 16.9, 16.11, 16.12) forme une partie élargie du passage de fluide (15) perpendiculaire à la direction d'écoulement du fluide visqueux.

2. Amortisseur rotatif selon la revendication 1, dans lequel le passage de fluide (15) comprend une première partie étroite à proximité du premier côté (11) de l'aile (8) et une seconde partie étroite à proximité du second côté (12) de l'aile, dans lequel la partie élargie du passage de fluide (15) est prévue entre la première et la seconde partie étroite du passage de fluide (15).

3. Amortisseur rotatif selon les revendications 1 et 2, dans lequel la rainure (16.1, 16.3, 16.5, 16.11, 16.12) s'étend dans la direction axiale dans : le côté supérieur (13) de l'aile (8), et/ou dans la paroi latérale cylindrique et/ou conique incurvée (10) de la chambre de fluide (6), et/ou dans le côté arrière (31) de l'aile (8), et/ou dans la paroi d'arbre (30), et/ou dans l'arbre d'aile (7).

4. Amortisseur rotatif selon les revendications 1 à 3, dans lequel la rainure (16.7, 16.9) s'étend dans la direction radiale dans : le côté inférieur (27) de l'aile (8), et/ou dans le côté supérieur (28) de l'aile (8), et/ou dans la paroi inférieure (25) de la chambre de fluide (6), et/ou dans la paroi supérieure (26) de la chambre de fluide (6).

5. Amortisseur rotatif selon les revendications 1 à 4, dans lequel deux rainures axiales (16.1, 16.2) ou plus sont prévues dans le côté supérieur (13) de l'aile (8), et/ou deux rainures axiales (16.5, 16.6) ou plus sont prévues dans la paroi latérale cylindrique et/ou conique incurvée (10) de la chambre de fluide (6), et/ou deux rainures radiales (16.7, 16.8) ou plus sont prévues dans la paroi inférieure (25) et/ou la paroi supérieure (26) de la chambre de fluide (6) et/ou deux rainures radiales (16.9, 16.10) ou plus sont prévues dans le côté inférieur (27) et/ou le côté supérieur (28) de l'aile (8) ; les rainures s'étendant sensiblement parallèlement.

6. Amortisseur rotatif selon les revendications 1 à 5, dans lequel la section transversale d'une rainure (16.1, 16.3, 16.5, 16.7, 16.9, 16.11, 16.12) est choisie parmi : une forme ronde, une forme en V, une forme rectangulaire, une forme multi-angulaire.

7. Amortisseur rotatif selon les revendications 1 à 6, dans lequel la forme du côté supérieur (13) de l'aile (8) correspond à, ou est congruente avec, une partie de la surface de la paroi latérale cylindrique et/ou conique incurvée (10) de la chambre de fluide (6).

8. Amortisseur rotatif selon les revendications 1 à 7, dans lequel au moins une seconde aile (9) est prévue sur la surface circonférentielle externe de l'arbre d'aile (7), laquelle seconde aile (9) s'étend dans une direction axiale de l'arbre d'aile (7), la seconde aile (9) faisant saillie vers la paroi latérale cylindrique et/ou conique incurvée (10) d'une seconde chambre de fluide (6'), créant un second passage de fluide (15') entre la seconde aile (9) et une paroi (10) de la seconde chambre de fluide (6'), dans lequel une rainure (16.3) est prévue dans un côté (13') de la seconde aile (9) et/ou dans une paroi (10) de la seconde chambre de fluide (6').

9. Amortisseur rotatif selon la revendication 3, dans lequel la paroi latérale cylindrique et/ou conique incurvée (10) des chambres de fluide (6, 6') est pourvue d'une pièce rapportée (17, 17'), et dans lequel les rainures axiales (16.5, 16.6) sont prévues dans la surface circonférentielle interne (18) d'une pièce rapportée (17).

10. Amortisseur rotatif selon les revendications 1 à 9, dans lequel la surface de la paroi latérale cylindrique et/ou conique incurvée (10) d'une chambre de fluide (6, 6') dans la direction tangentielle est prévue avec une distance radiale variable par rapport à l'arbre d'aile (7).

11. Amortisseur rotatif selon la revendication 10, dans lequel la distance radiale variable de l'arbre d'aile (7) par rapport à la surface de la paroi latérale cylindrique et/ou conique incurvée (10) d'une chambre de fluide (6, 6') est assurée au moyen d'une pièce rapportée (17).

12. Amortisseur rotatif selon la revendication 9, dans lequel la pièce rapportée (17) est un élément de rainure rotatif (19, 19') ayant un axe de rotation, la surface externe (20, 20') de la pièce rapportée (19, 19') dans la direction circonférentielle est pourvue de deux rainures (21, 21') ou plus, les rainures (21, 21') s'étendent dans la direction axiale par rapport à son axe de rotation.

13. Amortisseur rotatif selon la revendication 12, dans lequel l'axe de rotation de l'élément de rainure rotatif (19, 19') s'étend essentiellement parallèlement à l'arbre d'aile (7).

14. Amortisseur rotatif selon les revendications 12 et 13, dans lequel l'élément de rainure rotatif (19, 19') est reçu dans un évidement (23, 23') dans la paroi latérale cylindrique et/ou conique incurvée (10, 10') de la chambre de fluide (6, 6').
